# EUROPÄISCHE PATENTSCHRIFT

(11) **EP 0 704 803 B1**
(45) Veröffentlichungstag und Bekanntmachung des Hinweises auf die Patenterteilung: **05.03.1997**
(21) Anmeldenummer: 95100416.7
(22) Anmeldetag: 13.01.1995
(51) Int. Cl.: G06F 12/02

(54) **Verfahren zur Speicherverwaltung eines Flash-Speichers**
Flash memory management method
Procédé de gestion de mémoire flash

(30) Priorität: 30.09.1994 DE 4435042; 26.11.1994 DE 4442127
(43) Veröffentlichungstag der Anmeldung: 03.04.1996
(73) Patentinhaber: Alcatel SEL Aktiengesellschaft, D-70435 Stuttgart (DE)
(72) Erfinder: Kopp, Dieter, D-71282 Hemmingen (DE); Sienel, Jürgen, D-73765 Neuhausen (DE)
(74) Vertreter: Knecht, Ulrich Karl, Dipl.-Ing.

(56) Entgegenhaltungen:
- WO-A-94/20906

## Beschreibung

Die Erfindung betrifft ein Verfahren zur Speicherverwaltung von Flash-Speicherbausteinen.

Aus dem Stand der Technik sind, insbesondere in der Anwendung für digitale Anrufbeantworter, sogenannte Flash-Speicher bekannt. Ein Flash-Speicher ist ein kontinuierlicher, linearer Datenspeicher. Bei bekannten Flash-Speichern von z.B. der Firma INTEL, gibt es einen 4 MBit-Speicher der in sieben Blöcke unterschiedlicher Größe aufgeteilt ist. Bei Speichern von der Firma AMD wird eine Aufteilung in acht Blöcke vorgenommen. Der Flash-Speicher der Firma INTEL kann zu vier gleich großen Blöcken zusammengefaßt werden. Bei diesen beiden bekannten Flash-Speichern ist es nur möglich, blockweise zu löschen. Bei einer maximalen Abspeicherungszeit, von z.B. 15 Minuten und einer Unterteilung in vier Blöcke, bedeutet dies, daß pro Block mehr als 3 Minuten abgespeichert sind. Um einen ganzen Block zu löschen, müssen demnach alle Nachrichten, die in diesen 3 Minuten aufgesprochen wurden, entfernt werden.

Nachteilig ist hierbei, daß alle Nachrichten gelöscht werden müssen und zusätzlich, daß jedes erneute Schreiben und Löschen eines Blocks die Lebensdauer des Speichers reduziert. Die meisten Flash-Speicher haben eine durchschnittliche Lebensdauer von 100.000 Schreib/Lösch-Zyklen pro Block.

Aus dem Stand der Technik WO-A-9420906 ist ebenfalls ein System bekannt, bei dem Flash-Speicher verwendet werden. Hierbei werden die Flash-Speicher in eine Anzahl von Zonen aufgeteilt. Jede Zone enthält eine Anzahl nebeneinanderliegender physikalischer Speicherplätze. Die Zonen wiederum sind zu Einheiten zusammengefaßt, wobei pro Einheit mindestens eine Zone vorgesehen ist. Jede Einheit besteht aus adressierbaren Blöcken und jeder Block besteht aus nebeneinanderliegenden Gruppen von Bytes einer festgelegten Länge.

Zum Lesen und Schreiben dieser Flash-Speicher muß wenigstens eine Einheit vorgesehen werden, die nur aus freien Blöcken besteht. Diese Einheit dient als sogenannte Transfer-Einheit, so daß vor dem Löschen ganzer Blöcke noch bestehende Daten in dieser Transfer-Einheit gespeichert werden können.

Hierbei erfolgt aber ebenfalls das Löschen der Einheiten blockweise, weshalb sich selbige Nachteile wie zuvor erläutert ergeben.

Es ist die Aufgabe der Erfindung eine Flash-Speicherverwaltung vorzusehen, mit der eine hohe Auslastung des verfügbaren Speicherplatzes möglich ist.

Weitere Aufgabe der Erfindung ist es, neben der hohen Auslastung, eine Flash-Speicherverwaltung vorzusehen, die anwenderfreundlich ist.

Dies wird erfindungsgemäß gelöst durch die Lehre des Patentanspruchs 1 und die Lehre des Patentanspruchs 17.

Vorteilhaft ist hierbei, daß die Schreib/Lösch-Zyklen in allen Blöcken Anwendung finden,so daß gerade das Löschen von Blöcken einer Optimierung unterliegt.

Desweiteren ist es vorteilhaft, daß durch das Optimieren durch Umkopieren innerhalb des Speichers die Zeit, in der der Speicher belegt ist und nicht mit einer neuen Nachricht beschrieben werden kann, sehr kurz gehalten wird.

Weitere vorteilhafte Ausgestaltungen der Erfindung sind den Unteransprüchen zu entnehmen.

Im folgenden wird die Erfindung anhand der Figuren näher erläutert.

Folgende Figuren zeigen:
- Fig. 1: Ablaufdiagramm einer Speicheroptimierung,
- Fig. 2: schematische Darstellung einer Datei,
- Fig. 3a: Beispiel für das Verschieben von Dateien,
- Fig. 3b: Beispiel für das Löschen ganzer Blöcke,
- Fig. 3c: Beispiel für das Kopieren von Dateien in andere Blöcke,
- Fig. 3d: Beispiel für das Zwischenlagern von Dateien.

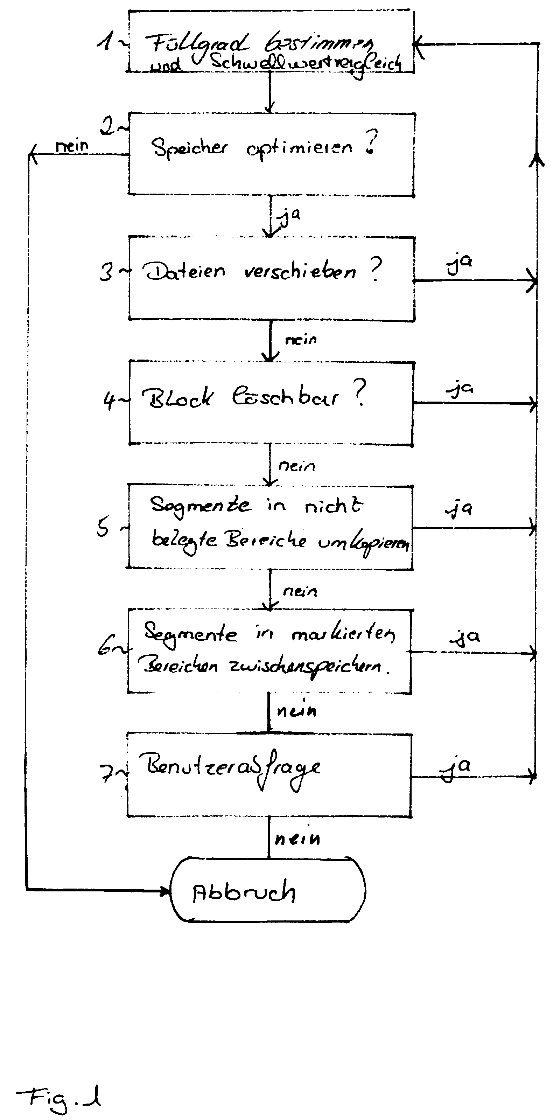

Im folgenden wird die Erfindung anhand von Fig. 1 näher erläutert.

Ein Flash-Speicher ist in eine Anzahl von Blöcken unterteilt. Diese Blöcke werden wiederum in eine Vielzahl von Segmente unterteilt. Daten in Form von Dateien, können erfindungsgemäß an einem beliebigen Segment beginnend segmentweise in dem Flash-Speicher abgespeichert werden. Zum Löschen dieser entsprechenden Dateien, werden diese segmentweise markiert. Gelöscht werden kann aber nur blockweise.

Als Beispiel wird im folgenden ein Flash-Speicher aufgeführt, der in vier Blöcke unterteilt ist. Als weitere Möglichkeit bietet sich ebenfalls an, einen Flash-Speicher in acht Blöcke, oder aber auch in sechzehn Blöcke zu unterteilen. Dies ist abhängig von dem jeweiligen Halbleiterhersteller. Bei dem hier gewählten Beispiel mit vier Blöcken wird in einem ersten Schritt 1 ein aktueller Füllgrad des Flash-Speichers bestimmt. Dies erfolgt, indem die Anzahl der nicht belegten, belegten zum Löschen markierten und der belegten, nichtmarkierten Segmente eines jeden Blocks bestimmt wird. Der Füllgrad der einzelnen Blocks und der Füllgrad des gesamten Flash-Speichers führen dazu, daß nach dem Überschreiten einer Schwelle, eine Speicheroptimierung vorgenommen werden soll. Hierbei kann die Schwelle ein empirisch ermittelter Wert sein, der z.B. einstellbar ist. Es ist auch denkbar, je nach Füllgrad unterschiedliche, d.h. variable Schwellen vorzugeben.

Liegt der Füllgrad des Speichers oberhalb der Schwelle, liegt die Anforderung vor, den Speicher zu optimieren 2. Dies kann gemäß einer Ausgestaltung der Erfindung durch ein Verschieben von belegten nichtmarkierten Dateien in Richtung des jeweils nicht belegten Endes des Speichers erfolgen. Die in dem ursprünglichen Block verbleibenden, markierten Dateien werden dabei blockweise gelöscht. Für den Fall, daß eine Verschiebung der Dateien nicht möglich ist, kann in einem weiteren Schritt 4 ermittelt werden, ob ein ganzer Block existiert, in dem sich keine belegten nichtmarkierten Segmente befinden. Der ganze Block wird dann gelöscht.

Für den Fall, daß sich kein Block in dem Flash-Speicher befindet, der ganz löschbar ist, wird derjenige Block ermittelt, in dem sich die kleinste Anzahl an belegten, nichtmarkierten Segmenten befindet. Diese belegten nichtmarkierten Segmente, die zu einer Datei dazugehören, werden dann in nichtbelegte Bereiche anderer Blöcke kopiert 5. Der zuvor ermittelte Block wird sodann gelöscht. Für den hier vorliegenden Fall ist vorausgesetzt, daß die Datei, die umkopiert wird, komplett in den nicht belegten Bereich hineinpaßt, also als Ganzes zusammenbleibt.

Für den Fall, daß keine Möglichkeit existiert, Segmente in nicht belegte Bereiche anderer Blöcke umzukopieren, wird in einem nächsten Schritt 6 wiederum der Block ermittelt, in dem sich die kleinste Anzahl an belegten nichtmarkierten Segmenten befindet, woraufhin diese Segmente des ermittelten Blocks in einem markierten Bereich eines anderen Blocks zwischengespeichert werden. Danach wird der zuvor ermittelte Block als Ganzes gelöscht und die zwischengespeicherten Daten werden wieder in den nun vollständig unbelegten Block zurückgeschrieben.

Für den Fall, daß erfindungsgemäß einer dieser vier Schritte 3, 4, 5, 6, zur Speicheroptimierung ausgeführt wird, wird wiederum der Füllgrad bestimmt und ein Schwellwertvergleich erfolgt 1.

Für den Fall, daß keiner dieser vorhergehenden Schritte ausgeführt wird, also eine Optimierung nicht möglich ist, wird in einem weiteren Schritt 7 eine Benutzerabfrage erfolgen. Hierbei wird der Benutzer gefragt nach denjenigen Dateien, die zusätzlich zum Löschen markiert werden sollen. Gibt der Benutzer darauf eine positive Antwort, also bestimmt löschbare Dateien, dann kann wiederum mit dem Schritt 1 fortgefahren werden. Für den Fall, daß der Benutzer kein weiteres Segment zu löschen wünscht, erfolgt ein Abbruch und keine neue Datei ist abspeicherbar.

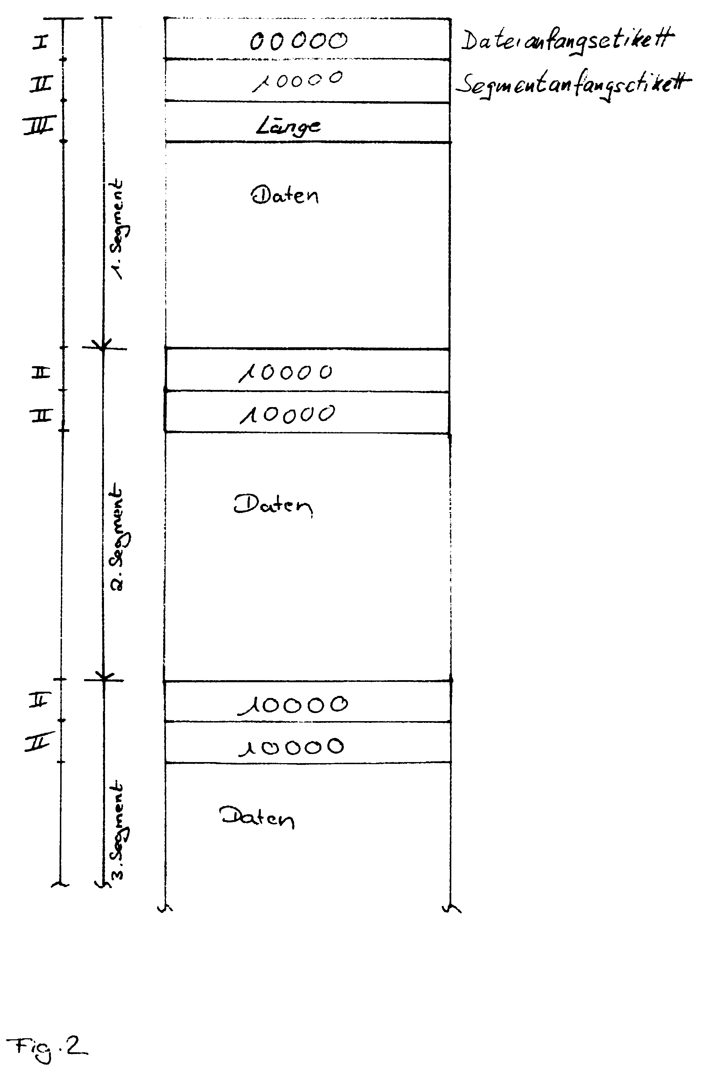

Im folgenden wird anhand der Fig. 2 die schematische Darstellung einer Datei erläutert, die mehrere Segmente lang ist. Am Anfang einer jeden Datei I steht ein Dateianfangsetikett 00000, dieses ist beispielsweise mit Nullen besetzt. Als zweites II steht am Anfang jeder Datei ein Segmentanfangsetikett, z. B. 10000. Zu Beginn des zweiten Segmentes, welches noch zu der Datei zählt, steht zweimal ein Segmentanfangsetikett 10000. Dies wird für jedes weitere Segment der Datei in dieser Form ausgeführt. Für den Beginn einer neuen Datei I, ist wieder ein neues Dateianfangsetikett 00000 vorgesehen. Somit ist eindeutig, wie lang eine existiernde Datei ist.

Des weiteren steht zum Beginn einer Datei in einem weiteren Bereich III z.B. die Gesamtlänge der existierenden Datei bis zu ihrem Ende. Wahlweise kann zusätzlich noch Datum, Jahreszahl und Uhrzeit des Eintrags der Datei eingetragen werden. Danach werden die zu speichernden Daten in dem verbleibenden Bereich oder in den verbleibenden Bereichen abgespeichert. Somit ist eindeutig festgelegt, welche Segmente belegt sind. Zum Markieren zum Löschen einer Datei wird, z.B. in alle Segmentanfangsetiketten II ebenfalls eine Null eingetragen, also 00000. Somit steht eindeutig fest, daß die darin noch abgespeicherten Daten zum Löschen bereitstehen. In dem Segmentanfangsetikett II kann durch einen Code festgelegt werden, welche Form von Daten darin gespeichert sind. Z.B. PCM-Daten oder ADPCM-Daten usw., was durch einen Code 01000 bzw. 00100 angegeben wird.

Im folgenden wird (ohne Zeichnung) ein Programmodul für das Betreiben eines Flash-Speichers erläutert. Der Flash-Speicher ist ebenfalls in Blöcke unterteilt, welche wiederum in eine Vielzahl von Segmenten unterteilt sind. Es wird ebenfalls ein zulässiger Füllgrad des Flash-Speichers ermittelt, der sich auch aus der Anzahl von nichtbelegten, aus der Anzahl von belegten und zum Löschen markierten Segmenten und aus der Anzahl von belegten nichtmarkierten Segmenten eines jeden Blocks bestimmt. Eine Speicheroptimierung wird dann mittels folgender Steuerbefehle vorgenommen. Mittels eines Steuerbefehls wird veranlaßt, von Dateien belegte Segmente zu verschieben, und mittels eines weiteren Steuerbefehls wird ein Block mit den verbleibenden belegten zum Löschen markierten Segmenten gelöscht. Für den Fall, daß dies nicht ausführbar ist, wird ein Block ermittelt, in dem sich keine belegten, nichtmarkierten Segmente befinden und, veranlaßt durch einen Steuerbefehl, wird dann der ganze Block gelöscht. Wenn dies ebenfalls nicht möglich ist, wird der Block ermittelt, in dem sich die kleinste Anzahl an belegten nichtmarkierten Segmenten befindet.

Diese werden dann, veranlaßt durch einen weiteren Steuerbefehl, in markierte Segmente anderer Blöcke zwischengespeichert. Der Block wird gelöscht und nach dem Löschen werden die zwischengespeicherten Segmente wieder in dem Block rekonstruiert. Für den Fall, daß dies ebenfalls nicht erfüllbar ist, wird der Block ermittelt, in dem sich die kleinste Anzahl an belegten, nichtmarkierten Segmenten befindet. Hierin wird dann, veranlaßt durch einen Steuerbefehl, ein Umkopieren der belegten, nichtmarkierten Segmente vorgenommen. Dies erfolgt aber nur dann, wenn eine ganze Datei in einen freien Speicherbereich umkopiert werden kann. Auch hier wird für den Fall, daß keine dieser Optimierungen möglich ist, mit einem weiteren Steuerbefehl eine Benutzerabfrage veranlaßt, bei der der Benutzer zu löschende Dateien zusätzlich markieren kann.

Eine breite Verwendung solcher Programmodule ist beispielsweise zur Speicherung von Sprachnachrichten in Anrufbeantwortern denkbar. Beispielsweise kann mit einem hier verwendeten Flash-Speicher eine Vielzahl von Nachrichten gespeichert werden, bis z.B. einer Dauer von 15 Minuten insgesamt. Häufig besteht hierbei der Wunsch, Nachrichten zu löschen und andere Nachrichten längere Zeit aufzubewahren.

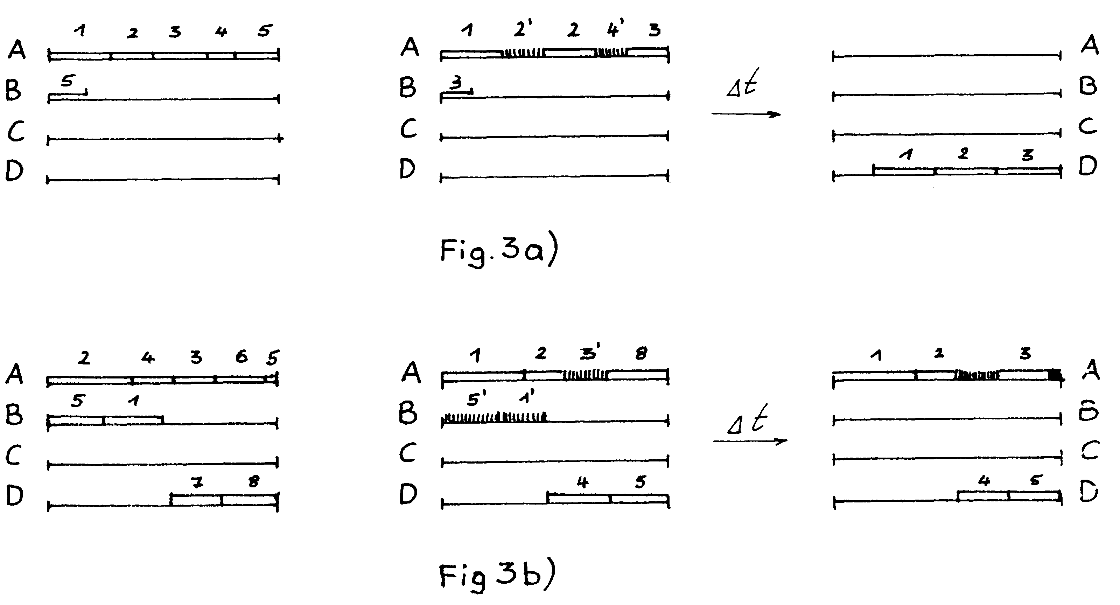

Im folgenden wird anhand der Fig. 3a ein Ausführungsbeispiels näher erläutert. In dem hier gewählten Beispiel besitzt der Flash-Speicher vier Blöcke A, B, C, D. Markierte Bereiche von Segmenten, die zum Löschen bereitstehen sind hierbei durch die kurzen vertikalen Striche angezeigt (||||). Segmente, die nichtmarkiert sind, also weiterhin gespeichert bleiben sollen, sollen durch den langgezogenen horizontalen Strich gekennzeichnet werden. Die Reihenfolge von Dateien gleicher Art kann erfindungsgemäß durch das Auswerten von Zusatzinformationen, die am Anfang des ersten Segmentes einer Datei stehen (wie Datum, Uhrzeit), ausgewertet werden.

In dem ersten Block A sind 5 unterschiedliche Dateien gespeichert 1, 2, 3, 4, 5. In dem zweiten Block B befindet sich lediglich das Ende der fünften Datei 5. Sollten nun z.B. die Dateien 2 und 4 zum Löschen markiert werden (vgl, Figur 3a, 2', 4'), so wird dann aus der Datei 3 die Datei 2 und aus der Datei 5 die Datei 3. In dem Fall, daß Dateien verschoben werden sollen Δt, werden die nichtmarkierten Dateien 1, 2, 3 zum Ende des Speichers in den vierten Block D hinverschoben. Die Kennzeichnung der Dateien wird wie bereits erläutert verändert. Aus 5 wird 3, aus 3 wird 2 und die 1 bleibt. So befinden sich die Dateien 1, 2, 3 nach dem Verschieben, von hinten aus gesehen in der Reihenfolge 3, 2, 1 in dem letzten Block D. Die markierten Dateien in dem ersten Block A werden nun in diesem Block gelöscht. Somit stehen wieder drei freie Blöcke zur erneuten Speicherung zur Verfügung A, B, und C. Neue Nachrichten in Form von Dateien werden nun wieder in den Block A hineingeschrieben.

Im folgenden wird anhand der Fig. 3b das Löschen ganzer Blöcke erläutert. Es existieren verschiedene Dateien. Im Block A befinden sich fünf Dateien 2, 3, 4, 5, 6. Davon ist die Datei 3 zum Löschen markiert (3'). Im Block B befinden sich zwei Dateien 5 und 1, beide zum Löschen markiert (5', 1'). Ansonsten ist der Block nicht belegt. Block C ist ebenfalls nicht belegt. Im Block D existieren Dateien 7, 8 die aufbewahrt werden sollen. Es wird nun festgestellt, daß der Block B löschbar ist. Zum Löschen kann z.B. der unbelegte Teil des Blocks ebenfalls markiert werden, woraufhin dann der Block gelöscht wird. Darauf folgend Δt befinden sich lediglich noch Daten in Block A und D. Dabei wurde 2 in 1, 4 in 2, 6 in 3, 7 in 4 und 8 in 5 geändert. Die Blöcke B und C sind frei.

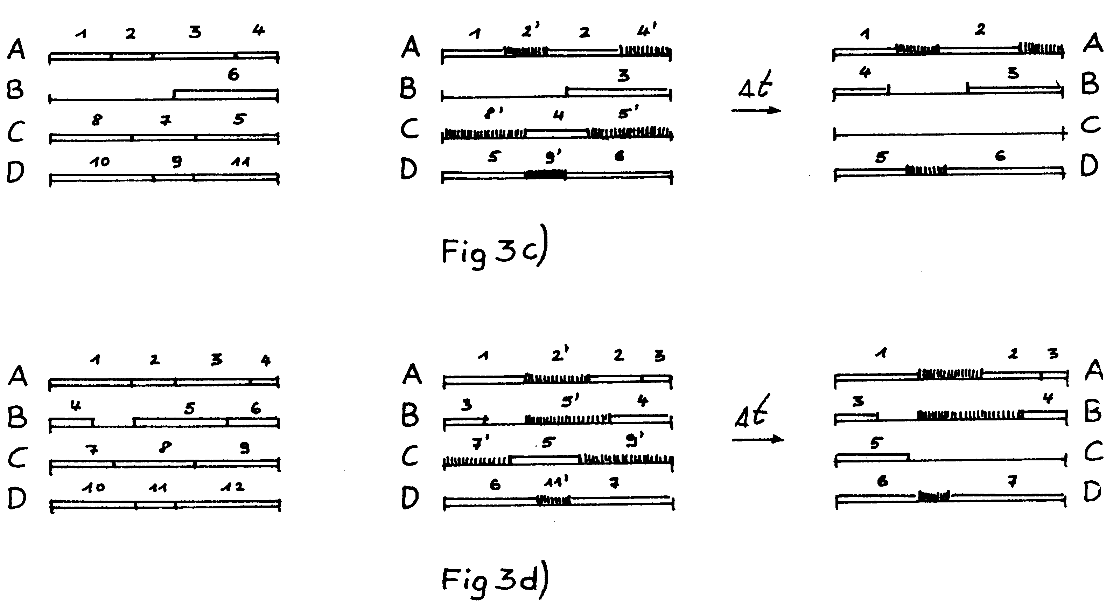

Im folgenden wird anhand der Fig. 3c das Kopieren von Dateien in andere Blöcke erläutert. Es wird ermittelt, welcher Block die geringste Anzahl an belegten, nichtmarkierten Segmenten aufweist. In diesem Fall ist dies der Block C. Die darin befindliche Datei 7, die nicht markiert ist, wird in den freien Bereich des Blockes B umkopiert (jetzt 4, nach dem Umnummerieren). Der verbleibende Bereich in C wird zum Löschen markiert, und somit (Δt) ist der Bereich wieder vollständig frei.

Im folgenden wird anhand der Fig 3d ein Beispiel für das Zwischenlagern von Dateien erläutert.

In dem hier vorliegenden Fall wird ebenfalls der Block ermittelt, in dem sich die geringste Anzahl an belegten, nichtmarkierten Segmenten befindet. Hier ist dies der Block C. Es wird versucht die Datei 5, (nach umnummerieren) die nicht markiert ist, um das Löschen des Blockes ausführen zu können, auszulagern. Es existiert kein unbelegter Bereich mehr, in den die Datei umkopiert werden kann. Deshalb wird versucht, die Datei 5 im Bereich der zum Löschen markierten Datei 2 zwischenzuspeichern. Diese reicht nicht aus, und so wird der verbleibende Teil der Datei z.B. im Block B, in dem unbelegten (zwischen 3 und 5'), aber auch in dem markierten Bereich 5' zwischengespeichert. Danach wird der Block gelöscht. Daraufhin (Δt) wird die Datei 5 in dem nunmehr "leeren" Block rekonstruiert.

Die Aufzählung der hier genannten Fälle ist nur beispielhaft und erhebt keinerlei Anspruch auf Vollständigkeit.

Im folgenden wird die Erfindung gemäß Patentanspruch 10 anhand des folgenden Beispiels erläutert.

Der Füllgrad des Flash-Speichers, der in vier Blöcke unterteilt ist, wird bestimmt indem die Anzahl der nicht belegten, die Anzahl der belegten zum Löschen markierten und der belegten, nicht markierten Segmente eines jeden der vier Blöcke bestimmt wird.

Überschreitet der Füllgrad eine Schwelle, wird der Block bestimmt, in dem sich die geringste Anzahl an belegten, nicht markierten Segmenten befindet.

In einem weiteren Schritt werden die belegten, nicht markierten Segmente verknüpft, um auf zum Löschen markierte Segmente eines weiteren Blocks überschrieben zu werden.

Diese Aufbereitung ist im folgenden an einem Beispiel erläutert, in dem beliebige Daten ausgewählt wurden. Dem zugrunde lag, daß insbesondere bei Sprachdaten eine Gleichverteilung von 0 und 1 auftritt.

In dem weiteren Block befinden sich zum Löschen markierte Segmente, was bedeutet, daß noch Daten in den Segmenten eingeschrieben sind. Demnach lassen sich diese Daten beispielshaft folgendermaßen angeben, in hexadezimaler Darstellung und dualer Darstellung:

**Tab. 1**

| HEX | DUAL |
|---|---|
| 8 3 | 1000 0011 |
| 0 2 | 0000 0010 |
| 0 0 | 0000 0000 |
| B A | 1011 1010 |
| 5 7 | 0101 0111 |
| 1 A | 0001 1010 |
| 0 F | 0000 1111 |
| E D | 1110 1101 |
| 2 2 | 0010 0010 |
| D 5 | 1101 0101 |
| D 2 | 1101 0010 |
| • | • |
| • | • |
| • | • |

Die Daten des belegten, nicht markierten Segments sind beispielsweise:

**Tab. 2**

| HEX | DUAL |
|---|---|
| 1 5 | 0001 0101 |

Diese Daten gilt es zu überschreiben.

Im folgenden werden die Daten der zum Löschen markierten Daten mittels einer logischen Verknüpfung, z.B. UND, mit den belegten nicht markierten Daten verknüpft.

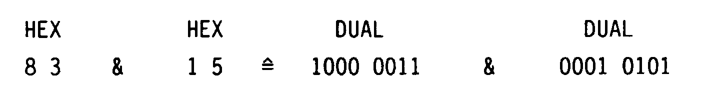

Daraus ergeben sich die verknüpften Daten

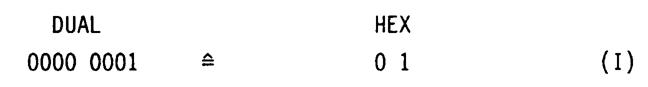

Somit sind die Daten aber noch nicht vollständig überschrieben worden, denn 0000 0001 entspricht nicht oder nur teilweise 0001 0101. Es werden demgemäß weitere Verknüpfungen notwendig, bis zum vollständigen Überschreiben.

Daraus folgt, daß auf die folgenden Daten, die sich in dem zum Löschen markierten Segment befinden eine erneute Verknüpfung, hier ebenfalls UND, angewendet wird.

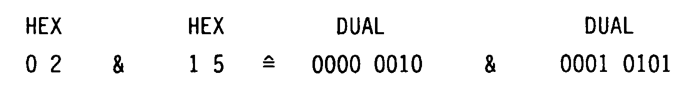

Daraus folgt:

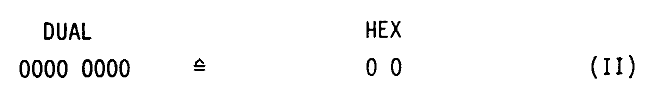

Dies liefert keinen Beitrag.

Und weiter

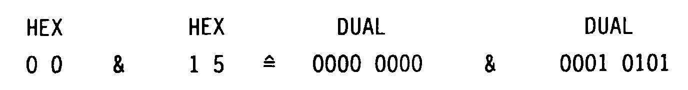

Daraus folgt:

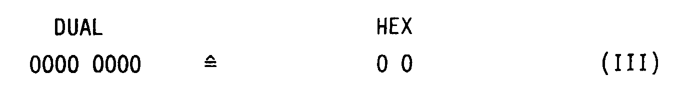

Und weiter

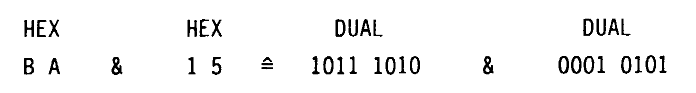

Daraus folgt:

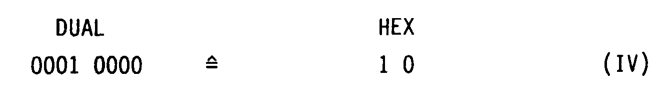

Dies liefert einen Beitrag, entspricht aber auch zusammen mit den Gleichungen I, II und III noch nicht den vollständigen Daten von 0001 0101.

Und weiter

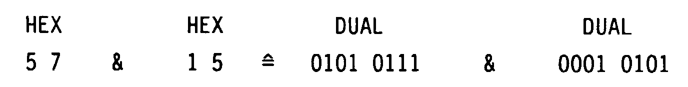

Daraus folgt:

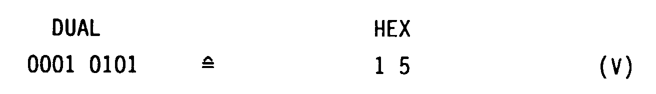

Im folgenden wird in tabellarischer Form ein Überblick über die bisher überschriebenen Daten gegeben. Dabei stehen in der linken Spalte die Daten die zu überschreiben sind und in der mittleren Spalte die Daten, die durch die Verknüpfung überschrieben wurden. Die beiden rechten Spalte geben die entsprechenden hexadezimalen Zahlen an, wobei die äußerste rechte Spalte die noch zu codierenden Daten angibt.

Bei der Gleichung (V) ergibt die logische Verknüpfung eine 15 =̂ 0001 0101.

**Tab. 3**

| DUAL | | DUAL | HEX | HEX |
|---|---|---|---|---|
| 0001 0101 | | | 1 5 | |
| | (I) | 0000 0001 | 0 1 | 1 4 |
| | (II) | 0000 0000 | 0 0 | 1 5 |
| | (III) | 0000 0000 | 0 0 | 1 4 |
| | (IV) | 0001 0000 | 1 0 | 0 4 |
| | (V) | 0001 0101 | 1 5 | 0 4 |
| 0001 0101 | | = 0001 0101 | | |

Da aber bereits eine 0 1 ≙ 0000 0001 mit der Gleichung (I) und eine 1 0 ≙ 0001 0000 mit der Gleichung (V) überschrieben wurde, wird hier mit der Gleichung (V) nur noch eine 0 4 ≙ 0000 0100 programmiert. Die Zahl der Gleichung (V) wird hierbei durch eine logische ODER Verknüpfung oder durch Subtraktion ermittelt.

Des weiteren ergibt sich, daß ein Endekriterium ermittelt werden muß, um festzulegen, daß das Überschreiben beendet ist.

Ein Endekriterium könnte folgendermaßen aussehen: Die wie vorab erläuterte logische Verknüpfung mit den folgenden zum Löschen markierten Daten ergibt:

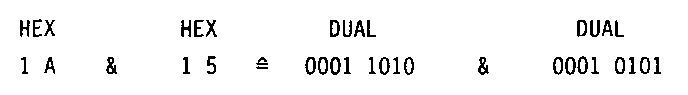

Daraus folgt:

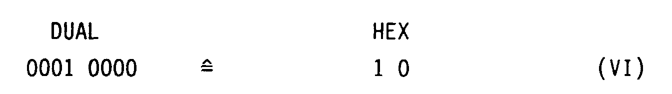

Vergleicht man dies mit den in der Tabelle 5 eingetragenen Werten, stellt man fest, daß die Gleichung (VI) der Gleichung (IV) entspricht. Entsprechend wird festgestellt, daß sich an mindestens einer Bitposition erneut eine 1 befindet, was als Endekriterium dient.

Ein weiteres Beispiel ergibt sich, wenn die belegten, nicht markierten Daten beispielsweise folgende sind:

**Tab. 4**

| HEX | DUAL |
|---|---|
| 0 0 | 0000 0000 |

Die zum Löschen markierten sind beispielsweise:

**Tab. 5**

| HEX | DUAL |
|---|---|
| 0 F | 0000 1111 |
| E D | 1110 1101 |
| • | • |
| • | • |
| • | • |

In der Verknüpfung die der zuvor erläuterten entspricht, würde jede Verknüpfung mit 00 zu 00 führen. Aus diesem Grund muß das Endekriterium erweitert werden.

Festzustellen ist folgendes:

**Tab. 6**

| HEX | DUAL | & | DUAL | HEX | = | |
|---|---|---|---|---|---|---|
| 0 0 | 0000 0000 | | 0000 1111 | 0 F | | 0000 0000 |
| | | | 1110 1101 | E D | | 0000 0000 |

An den Bitpositionen 0, 2 und 3 der Daten der mittleren Spalte ist in beiden Fällen jeweils eine 1. Entsprechend wird festgelegt, daß falls mehr als eine Bitposition mindestens zwei mal eine 1 enthält, diese ein Byte mit 0 repräsentiert und somit das Endekriterium festlegt.

Ein weiteres Beispiel ist mit den folgenden zum Löschen markierten Daten (siehe Tab. 7) und den belegten, nicht markierten Daten gegeben (Tab. 8).

**Tab. 7**

| HEX | DUAL |
|---|---|
| 2 2 | 0010 0010 |
| D 5 | 1101 0101 |
| D 2 | 1101 0010 |
| • | • |
| • | • |
| • | • |

**Tab. 8**

| HEX | DUAL |
|---|---|
| 0 0 | 0000 0000 |

Die folgende Tabelle zeigt die Ergebnisse der logischen Verknüpfung:

**Tab. 9**

| DUAL | & | DUAL | |
|---|---|---|---|
| 0000 0000 | | | |
| | (VII) | 0010 0010 | 0000 0000 |
| | (VIII) | 1101 0101 | 0000 0000 |
| | (IX) | 1101 0010 | 0000 0000 |

Die dualen Werte der Gleichungen (VII) und (VIII) haben keine übereinstimmende Bitposition mit 1, woraus sich ergibt, daß kein Endekriterium erfüllt ist. Der Vergleich der Gleichung (IX) mit Gleichung (VIII) jedoch zeigt wieder übereinstimmende Bitpositionen, woraus wiederum ein Endekriterium erfüllt ist.

Zusammenfassend ergeben die Daten aus der Tab. 1 nach dem Überschreiben

**Tab. 10**

| | |
|---|---|
| 8 3 → 0 1 | → für 1 5 |
| 0 2 → 0 0 | |
| 0 0 → 0 0 | |
| B A → 1 0 | |
| 5 7 → 0 4 | |
| 1 A → 1 0 | |
| | |
| 0 F | → für 0 0 |
| E D | |
| | |
| 2 2 → 0 0 | → für 0 0 |
| D 5 | |
| D 2 | |

Die wie vorab erläutert, so überschriebenen nicht markierten Daten werden, nachdem der Block gelöscht wurde, vorzugsweise wieder rekonstruiert. Durch die Löschung entsteht neuer freier Speicherplatz und es kann erneut Sprache aufgezeichnet werden.

## Patentansprüche

1. Verfahren zum Betreiben eines Flash-Speichers, der in Blöcke unterteilt ist, und dessen Blöcke in eine Vielzahl von Segmenten unterteilt werden,
**dadurch gekennzeichnet**, daß
- Daten in Form von Dateien mit einem beliebigen Segment beginnend segmentweise abgespeichert werden und zum Löschen entsprechende Dateien segmentweise markiert werden,
- ein aktueller Füllgrad des Flash-Speichers bestimmt wird (1), indem die Anzahl der belegten und zum Löschen markierten, der belegten, nicht markierten und der nicht belegten Segmente eines jeden Blocks bestimmt wird, und
- nach dem Überschreiten einer Schwelle des Füllgrades eine Speicheroptimierung (2) vorgenommen wird.

2. Verfahren nach Anspruch 1, bei dem zur Speicheroptimierung belegte, nicht markierte Dateien in Richtung des jeweils nicht belegten Endes des Flash-Speichers verschoben werden (3) und die in den Blöcken verbleibenden, markierten Dateien blockweise gelöscht werden.

3. Verfahren nach Anspruch 1 oder 2, bei dem zur Speicheroptimierung ermittelt wird, ob ein Block existiert, in dem sich keine belegten, nicht markierten Segmente befinden, und dieser dann gelöscht wird (4).

4. Verfahren nach einem der Ansprüche 1 bis 3, bei dem zur Speicheroptimierung der Block ermittelt wird, in dem sich die kleinste Anzahl an belegten, nicht markierten Segmenten befindet, und diese dann in nicht belegte Bereiche anderer Blöcke kopiert werden (5) und dann der zuvor ermittelte Block gelöscht wird.

5. Verfahren nach einem der Ansprüche 1 bis 4, bei dem zur Speicheroptimierung der Block ermittelt wird, in dem sich die kleinste Anzahl an belegten, nicht markierten Segmenten befindet, diese Segmente in einen markierten Bereich eines anderen Blocks zwischengespeichert werden (6) und der zuvor ermittelte Block gelöscht wird, worin dann die zwischengespeicherten Daten rekonstruiert werden.

6. Verfahren nach einem der Ansprüche 1 bis 5, bei dem, falls nach dem Überschreiten der Schwelle des Füllgrades keine Speicheroptimierung durchführbar ist, eine Benutzerabfrage erfolgt (7), bei der der Benutzer diejenigen Dateien angeben kann, die zusätzlich zum Löschen markiert werden sollen.

7. Verfahren nach einem der Ansprüche 1 bis 6, bei der am Anfang jeder Datei ein Dateianfangsetikett (I) und ein Segmentanfangsetikett (II) definiert ist und bei dem in jedem weiteren dazugehörenden Segment zwei Segmentanfangsetiketten definiert sind.

8. Verfahren nach Anspruch 7, bei der das Dateianfangsetikett mit Nullen besetzt wird, und über die Besetzung der Segmentanfangsetiketten die Art der gespeicherten Daten gekennzeichnet wird.

9. Verfahren nach Anspruch 8, bei dem die markierten Segmente mit Nullen in den Segmentanfangsetiketten gekennzeichnet werden.

10. Verfahren nach Anspruch 1, bei dem
- nach dem Überschreiten einer Schwelle eines Füllgrades (1), der sich aus der Anzahl der belegten und zum Löschen markierten, der belegten, nicht markierten und der nicht belegten Segmente eines jeden Blocks bestimmt, der Block ermittelt wird, in dem sich die kleinste Anzahl an belegten, nicht markierten Segmenten befindet,
- und die belegten, nicht markierten Segmente dieses Blocks mittels einer Verknüpfung auf zum Löschen markierte Segmente eines weiteren Blocks überschrieben werden,
- und dann der zuvor ermittelte Block gelöscht werden kann.

11. Verfahren nach Anspruch 10, bei dem die Verknüpfung dadurch erfolgt, daß eine logische UND Verknüpfung zwischen Daten der belegten, nicht markierten Segmente und Daten in den zum Löschen markierten Segmenten vorgenommen wird.

12. Verfahren nach Anspruch 10, bei dem die Verknüpfung derart erfolgt, daß eine logische ODER Verknüpfung zwischen Daten der belegten, nicht markierten Segmente und Daten in den zum Löschen markierten Segmenten vorgenommen wird.

13. Verfahren nach einem der Ansprüche 11 oder 12, bei dem mindestens eine weitere logische Verknüpfung der Daten der belegten, nicht markierten Segmente mit Daten mindestens eines weiteren, zum Löschen markierten Segments bis zur Erfüllung eines Endekriteriums vorgenommen wird.

14. Verfahren nach Anspruch 13, bei dem sich das Endekriterium daraus bestimmt, daß in einem Segment in einer Bitposition die Wiederholung mindestens eines Bitwertes auftritt.

15. Verfahren nach einem der Ansprüche 10 bis 14, bei dem die überschriebenen Daten des weiteren Blocks in dem zuvor ermittelten, gelöschten Block wieder rekonstruiert werden.

16. Verfahren nach Anspruch 1, bei dem zur Kennzeichnung von Dateien gleicher Art Zusatzinformationen am Anfang des ersten Segments einer Datei eingefügt werden.

17. Programmodul für das Betreiben eines Flash-Speichers, der in Blöcke unterteilt ist, und dessen Blöcke in eine Vielzahl von Segmenten unterteilt sind,
**dadurch gekennzeichnet**, daß
ein zulässiger Füllgrad des Flash-Speichers, der sich aus der Anzahl von nicht belegten, belegten und zum Löschen markierten Segmenten und belegten, nicht markierten Segmenten eines jeden Blocks bestimmt, ermittelt wird, und eine Speicheroptimierung dann mittels Steuerbefehlen vorgenommen wird,
indem mittels eines Steuerbefehls veranlaßt wird, von Dateien belegte Segmente zu verschieben und indem mittels eines Steuerbefehls verbleibende belegte, zum Löschen markierte Segmente gelöscht werden, oder
indem ein Block ermittelt wird, in dem sich keine belegten und nicht markierten Segmente befinden, der dann veranlaßt durch einen Steuerbefehl gelöscht wird, oder
indem der Block ermittelt wird, in dem sich die kleinste Anzahl an belegten, nicht markierten Segmenten befindet, die dann, veranlaßt durch einen Steuerbefehl in nicht belegte Segmente anderer Blöcke kopiert werden, oder
indem der Block ermittelt wird, in dem sich die kleinste Anzahl an belegten, nicht markierten Segmenten befindet, welche dann, veranlaßt durch einen Steuerbefehl, in markierten Segmenten anderer Blöcke zwischengespeichert werden und dann nach dem Löschen des ermittelten Blocks wieder rekonstruiert werden, oder
indem der Block ermittelt wird, in dem sich die kleinste Anzahl an belegten, nicht markierten Segmenten befindet, welche dann in verknüpfter Form auf Daten in zum Löschen markierten Segmenten eines weiteren Blocks überschrieben werden und/oder
indem ein weiterer Steuerbefehl eine Benutzerabfrage veranlaßt, bei der der Benutzer zu löschende Dateien markieren kann.

18. Verwendung des Programmoduls nach Anspruch 17 zur Speicherung von Sprachnachrichten, insbesondere in einem Anrufbeantworter.

## Claims

1. Method for operating a flash memory, which is divided into blocks and where the blocks are subdivided into a number of segments, characterized in that
- data in the form of files are stored in segments starting with any segment, and corresponding files are marked for deletion in segments,
- a current degree of filling is determined for the flash memory (1), wherein the number of occupied segments marked for deletion, and the number of unmarked and unoccupied segments are determined for each block, and
- a memory optimization (2) is carried out after a degree of filling threshold has been exceeded.

2. Method as claimed in claim 1, whereby for the memory optimization, occupied unmarked files are shifted in the direction of the respective unoccupied end of the flash memory (3), and the marked files that remain in the blocks are deleted in blocks.

3. Method as claimed in claim 1 or 2, whereby it is established for the memory optimization, whether a block exists in which no occupied unmarked segments are located, and this block is then deleted (4).

4. Method as claimed in one of claims 1 to 3, whereby it is established for the memory optimization, in which block the smallest number of occupied unmarked segments is located, which are then copied to unoccupied areas of other blocks (5), and the previously determined block is then deleted.

5. Method as claimed in one of claims 1 to 4, whereby it is established for the memory optimization, in which block the smallest number of occupied unmarked segments is located, where these segments are then temporarily stored in a marked area of another block (6), while the previously determined block is deleted and then the temporarily stored data are reconstructed therein.

6. Method as claimed in one of claims 1 to 5 whereby, if no memory optimization can be carried out after the degree of filling threshold has been exceeded, a user inquiry is made (7), whereby the user can indicate those data which are to be additionally marked for deletion.

7. Method as claimed in one of claims 1 to 6, whereby a file starting label (I) and a segment starting label (II) are defined at the start of each file, and where two segment starting labels are defined for each further pertinent segment.

8. Method as claimed in claim 7, whereby the file starting label is occupied by zeros, and the type of stored data are identified by the occupation of the segment starting labels.

9. Method as claimed in claim 8, whereby the marked segments are identified by zeros in the segment starting labels.

10. Method as claimed in claim 1 whereby,
- after the degree of filling threshold (I) has been exceeded, it is determined from the number of occupied segments marked for deletion, from the number of occupied unmarked segments, and from the number of unmarked and unoccupied segments of each block, which block contains the smallest number of occupied unmarked segments,
- and the occupied unmarked segments of this block are overwritten by means of a linkage to the segments of another block which are marked for deletion,
- and the previously determined block can then be deleted.

11. Method as claimed in claim 10, whereby the linkage takes place by performing a logical AND linkage between data of the occupied unmarked segments and data in the segments that are marked for deletion.

12. Method as claimed in claim 10, whereby the linkage takes place by performing a logical OR linkage between data of the occupied unmarked segments and data in the segments that are marked for deletion.

13. Method as claimed in one of claims 11 or 12, whereby at least one other logical linkage of the data of the occupied unmarked segments is performed with data of at least one further segment marked for deletion, until a final criterion is fulfilled.

14. Method as claimed in claim 13, whereby the final criterion is determined in that the repetition of at least one bit value takes place in a bit position of a segment.

15. Method as claimed in one of claims 10 to 14, whereby the overwritten data of the further block are reconstructed in the previously determined deleted block.

16. Method as claimed in claim 1 whereby, to identify files of the same type, additional information is inserted at the start of the first segment of a file.

17. Program module for the operation of a flash memory divided into blocks, and whose blocks are subdivided into a number of segments, characterized in that
an allowable degree of flash memory filling is determined from the number of unoccupied, occupied and marked for deletion segments, and from occupied unmarked segments of each block, and a memory optimization is then carried out by means of control commands,
whereby a control command causes segments which are occupied by files to be shifted, and whereby a control command deletes the remaining occupied segments which are marked for deletion, or
whereby a block is determined in which no occupied and unmarked segments are located, which is then deleted by means of a control command, or
whereby the block containing the smallest number of occupied unmarked segments is determined, which are then copied to unoccupied segments of other blocks by means of a control command, or
whereby the block containing the smallest number of occupied unmarked segments is determined, which are then temporarily stored in marked segments of other blocks by means of a control command, and are reconstructed after deletion of the determined block, or
whereby the block containing the smallest number of occupied unmarked segments is determined, which are then overwritten in linked form on data in the segments of another block which are marked for deletion, and/or
whereby another control command causes a user inquiry, in which the user can mark files for deletion.

18. Use of the program module claimed in claim 17 for storing voice messages, particularly in an answering machine.

## Revendications

1. Procédé d'exploitation d'une mémoire flash, qui est subdivisée en blocs et dont les blocs sont subdivisés en une pluralité de segments, caractérisé en ce que
- des données sous forme de fichiers, commençant par un segment quelconque, sont mis en mémoire par segments, et que des fichiers correspondants sont marqués par segments pour effacement,
- un degré de remplissage actuel de la mémoire flash est défini (1), le nombre de segments occupés et marqués pour effacement, de segments occupés non marqués, et de segments non occupés de chaque bloc étant défini, et
après dépassement d'un seuil du degré de remplissage une optimisation de la mémoire (2) est entreprise.

2. Procédé selon la revendication 1, dans lequel, pour l'optimisation de la mémoire, des fichiers occupés non marqués sont déplacés en direction chaque fois de la fin non occupée de la mémoire flash (3), et dans lequel les fichiers marqués restant dans les blocs sont effacés par bloc.

3. Procédé selon la revendication 1 ou 2, dans lequel on détermine pour l'optimisation de la mémoire s'il existe un bloc dans lequel ne se trouvent pas de segments occupés non marqués, et dans lequel celui-ci est ensuite effacé (4).

4. Procédé selon l'une des revendications 1 à 3, dans lequel on détermine pour l'optimisation de la mémoire le bloc dans lequel se trouve le plus petit nombre de segments occupés non marqués, et dans lequel ceux-ci sont ensuite copiés dans des zones non occupées d'autres blocs (5) et dans lequel le bloc déterminé précédemment est ensuite effacé.

5. Procédé selon l'une des revendications 1 à 4, dans lequel on détermine pour l'optimisation de la mémoire le bloc dans lequel se trouve le plus petit nombre de segments occupés non marqués, dans lequel ces segments sont mis en mémoire tampon dans une zone marquée d'un autre bloc (6), et dans lequel est effacé le bloc déterminé précédemment dans lequel les données mises en tampon sont ensuite reconstituées.

6. Procédé selon l'une des revendications 1 à 5, dans lequel, au cas où aucune optimisation de la mémoire n'est possible après dépassement du seuil du degré de remplissage, il se produit une interrogation de l'utilisateur (7) lors de laquelle l'utilisateur peut indiquer les fichiers supplémentaires qui doivent être marqués pour effacement.

7. Procédé selon l'une des revendications 1 à 6, dans lequel, au début de chaque fichier est définie une étiquette de début de fichier (I) et une étiquette de début de segment (II), et dans lequel sont définies dans chaque autre segment qui en fait partie deux étiquettes de début de segment.

8. Procédé selon la revendication 7, dans lequel à l'étiquette de début de fichier sont attribués des zéros, et dans lequel le type de données mémorisées est identifié par l'attribution des étiquettes de début de segment.

9. Procédé selon la revendication 8, dans lequel les segments marqués sont identifiés dans les étiquettes de début de segment par des zéros.

10. Procédé selon la revendication 1, dans lequel
- après dépassement d'un seuil d'un degré de remplissage (1), qui se définit à partir du nombre de segments occupés et marqués pour effacement, de segments occupés non marqués, et de segments non occupés d'un bloc quelconque, on détermine le bloc dans lequel se trouve le plus petit nombre de segments occupés non marqués,
- et dans lequel les segments occupés non marqués de ce bloc sont superposé sur des segments marqués pour effacement d'un autre bloc au moyen d'un enchaînement,
- et dans lequel le bloc précédemment déterminé peut ensuite être effacé.

11. Procédé selon la revendication 10, dans lequel l'enchaînement s'effectue par le fait qu'un enchaînement logique ET est entrepris entre des données des segments occupés non marqués et des données se trouvant dans les segments marqués pour effacement.

12. Procédé selon la revendication 10, dans lequel l'enchaînement s'effectue de telle sorte qu'un enchaînement logique OU est entrepris entre les données des segments occupés non marqués et les données se trouvant dans les segments marqués pour effacement.

13. Procédé selon l'une des revendications 11 ou 12, dans lequel est entrepris au moins un autre enchaînement logique des données des segments occupés non marqués avec des données d'au moins un autre segment marqué pour effacement, jusqu'à ce que soit rempli un critère de fin.

14. Procédé selon la revendication 13, dans lequel le critère de fin se définit par le fait qu'il se produit dans un segment dans une position binaire la répétition d'au moins une valeur binaire.

15. Procédé selon l'une des revendications 10 à 14, dans lequel les données superposées du bloc suivant sont de nouveau reconstituées dans le bloc effacé précédemment déterminé.

16. Procédé selon la revendication 1, dans lequel on ajoute pour l'identification de fichiers de même type des informations complémentaires au début du premier segment d'un fichier.

17. Module de programme pour l'exploitation d'une mémoire flash, qui est subdivisé en blocs, et dont les blocs sont subdivisés en une pluralité de segments, caractérisé en ce que
un degré de remplissage autorisé de la mémoire flash est déterminé, qui se définit à partir du nombre de segments non occupés, occupés et marqués pour effacement, et de segments occupés non marqués d'un bloc quelconque, et qu'une optimisation de mémoire est entreprise ensuite au moyen d'instructions de commande,
en ce qu'au moyen d'une instruction de commande il est possible de déplacer des segments occupés par des fichiers et que, au moyen d'une instruction de commande, des segments occupés restants, marqués pour effacement, sont effacés, ou
en ce qu'on détermine un bloc dans lequel ne se trouvent pas de segments occupés et non marqués, lequel bloc est effacé ensuite à la suite d'une instruction de commande, ou
en ce qu'on détermine le bloc dans lequel se trouve le plus petit nombre de segments occupés non marqués, qui ensuite, à la suite d'une instruction de commande, sont copiés dans des segments non occupés d'autres blocs, ou
en ce qu'on détermine le bloc dans lequel se trouve le plus petit nombre de segments occupés non marqués, qui sont ensuite, suite à une instruction de commande, mis en mémoire tampon dans des segments marqués d'autres blocs, puis, après l'effacement du bloc déterminé, de nouveau reconstitués, ou
en ce qu'on détermine le bloc dans lequel se trouve le plus petit nombre de segments occupés non marqués, qui sont ensuite superposés sous forme enchaînée sur des données dans des segments marqués pour effacement d'un bloc suivant et/ou
en ce qu'une instruction de commande suivante donne lieu à une interrogation de l'utilisateur lors de laquelle l'utilisateur peut marquer des fichiers à effacer.

18. Utilisation du module de programme selon la revendication 17, pour la mémorisation de messages vocaux, en particulier dans un répondeur téléphonique.
